# EUROPEAN PATENT SPECIFICATION

(11) **EP 2 750 886 B1**
(45) Date of publication and mention of the grant of the patent: **06.06.2018**
(21) Application number: 12759854.8
(22) Date of filing: 28.08.2012
(51) Int. Cl.: B32B 27/08, G09F 3/02

(54) **LAMINATE COMPOSITION, FILM AND RELATED METHODS**
LAMINATZUSAMMENSETZUNG, FOLIE UND ZUGEHÖRIGE VERFAHREN
COMPOSITION STRATIFIÉE, FILM ET PROCÉDÉS ASSOCIÉS

(30) Priority: 31.08.2011 US 201161529895 P
(43) Date of publication of application: 09.07.2014
(73) Proprietor: Avery Dennison Corporation, Pasadena, California 91103 (US)
(72) Inventor: SHIH, Frank, Y., Pasadena, CA 91103 (US); VANMARCKE, Ben, Pasadena, CA 91103 (US); MALLYA, Prakash, Pasadena, CA 91103 (US); CHACKO, Sujith, Pasadena, CA 91103 (US); SRIVATSAN, Nagarajan, Pasadena, CA 91103 (US); SCHUT, Johannes, Pasadena, CA 91103 (US); SCHNEIDER, Robert, W., Pasadena, CA 91103 (US); REEKMANS, Steven, Pasadena, CA 91103 (US)
(74) Representative: Müller-Boré & Partner Patentanwälte PartG mbB
(86) International application number: PCT/US2012/052616
(87) International publication number: WO 2013/033067

(56) References cited:
- WO-A1-02/31016
- WO-A2-2010/062438
- US-A- 5 688 573
- US-A1- 2010 009 108
- US-B1- 6 573 011

## Description

### CROSS REFERENCE TO RELATED APPLICATION

The present application claims the benefit of U.S. Provisional Application Ser. No. 61/529,895 filed August 31, 2011 and titled "Laminate Composition, Film and Related Methods," which is incorporated by reference herein in its entirety. This application is a continuation-in-part of International Patent Application No. PCT/US08/84812, filed on November 26, 2008, which is a continuation-in-part of International Patent Application No. PCT/US2008/069706, each of which are incorporated herein by reference in its entirety. This application is also a continuation-in-part U.S. Patent Application Ser. No. 13/040,642, filed March 4, 2011, which claims priority to Provisional Patent Application 61/310,378, filed March 4, 2010, each of which are incorporated herein by reference in its entirety.

### TECHNICAL FIELD

The present invention relates to adhesive and non-adhesive articles and methods of making the same. The articles may be used in a variety of applications including, for example, signs, graphics, wall covering, pressure sensitive products, and the like.

### BACKGROUND

Vinyl films plasticized with plasticizers have been used for many years in adhesive labels, tapes, and decorative sheets. Vinyl films, particularly polyvinyl chloride (PVC) films, have had wide acceptance for such applications because, among other things, they are inexpensive and weather resistant and can be colored easily with pigments and dyes. In addition, plasticized polyvinyl chloride (PVC) has had particularly wide acceptance because its properties can be modified over a wide range by the incorporation of plasticizers. These films have been used in various graphic applications with success.

PVC films have been widely used in a number of promotional and advertising campaigns, such as outdoor graphics applications in the past. Such applications include signs, banners, fleet marketing graphics, architectural and wall covering, consumer product labeling, and other pressure sensitive products. Currently, there is a movement to reduce or even eliminate PVC-based products from the consumer marketing, promotional, and advertising product streams based on increased awareness in recent years of PVC's potential impact on both the environment and health.

Films for outdoor marketing and graphics applications ideally should have at least some of the following properties: printability, durability, color retention or fastness, weather-ability, resistant to mild chemicals and cleaners, dimensionally stable, tear resistance and scratch resistance. Conformability and proper mechanical properties such as tensile elongation, stress and relaxation properties and tensile strength are also beneficial for the application process. A non-conformable film, i.e., a film that does not have sufficient elongation or flexibility, may not follow the contour of the substrate or surface to which it is applied, which creates bubbles or gaps between the surface and the film. Insufficient elongation properties may make the film hard to apply over a surface, e.g., those surfaces that have curves, angles, corrugations, ridges, and other non-planar configurations. Too much elongation, however, may allow the film to deform during application and causing a distortion of the printed indicia. Films with a low tensile strength may cause the film to break easily when being stretched such as when the film is being applied to a non-planar surface.

The desirable functional features of such laminates include the ability to readily hand-peel the adhesive containing film off from the release liner and apply on to a variety of substrates during hot or cold seasons; conform well over rivets and corrugation (to look as though the graphics containing laminate signs were painted); allow for the ability to reposition the laminate by minimizing initial adhesion to substrate; minimize or eliminate trapping of air bubbles during application to substrates; offer excellent compatibility with various printing techniques as well as good reception to various type of printing inks; tolerate a wide variation in outdoor weather conditions such as rain, solar irradiation, winter as well as summer temperatures; remove cleanly when desired from the side of these vehicles without leaving adhesive residue or film breaking due to becoming brittle and offer sufficient adhesion to various metal and painted and plastic substrates over a wide range of temperatures spanning from summer to winter months. Obtaining all the desirable product attributes successfully within a laminate is, therefore, quite a challenge that requires the skillful combination of facestock, adhesive and release liner with optimum requisite properties.

Vinyl films have been useful in graphic and wall covering applications because of their superior flexibility and conformability. The halogen-containing materials such as PVC, however, have generally been recognized as producing undesirable by-products when burned. Further, many environmentally friendly, non-PVC films, have demonstrated good durability and/or scratch resistance marketplace.

As new PVC replacement films are being developed, some of the films have superior performance in one area, such as printability, but lack adequate functionality with respect to the other properties such as the outdoor durability to make the films acceptable for the demanding advertising and promotional market. One possible way to resolve the foregoing problem is to use a multi-layer film laminate with each layer providing one or more of the desired properties so that the laminate has all the desired properties that are needed.

When used as the outermost protective layer in a film laminate, or simply used as a protective film for a given surface, good outdoor durability and, in many cases, optical transparency is also required so the indicia on an underneath printable layer can be visible. US2010/009108 describes a film comprising a. an emulsion polymer selected from the group consisting of a vinyl acetate homopolymer or copolymer or the mixture of an acrylic copolymer or its mixture with a VAE copolymer, a VAE and acrylic hybrid, and a polyurethane containing polymer, and b. at least one additive selected from the group consisting of a pigment, a surfactant, a dispersant, a wetting agent, a plasticizer, a defoamer, a coupling agent, a solvent, a UV absorber, a fire retardant, and a light stabilizer, and wherein the film has an elongation of at least 50 %. WO 2010/062438 describes a film comprising a. an emulsion polymer selected from the group consisting of a vinyl acetate homopolymer or copolymer or the mixture of an acrylic copolymer or its mixture with a VAE copolymer, a VAE and acrylic hybrid, a styrene copolymer, a polyurethane containing polymer and a biodegradable polymer, and b. at least one non-halogen fire retardant. US6573011 describes a packaging label comprising in order an environmental protection layer, an image formed in a gelatin media, a base, an adhesive, and a peelable back, wherein said environmental protection layer comprises a mixture of vinyl polymer and urethane polymer, wherein said urethane polymer has an indentation modulus less than 0.6 GPa and wherein said environmental protection layer is less than 10 micrometers in thickness. US5688573 describes a halogen-free acrylic urethane sheet material comprising a self-supporting film of a polymer comprising the reaction product of components A, B and C, wherein component A comprises a copolymer of (i) a monoester of acrylic or methacrylic acid and an aliphatic diol having 2 to 8 carbon atoms and (ii) an ester of acrylic or methacrylic acid and an aliphatic alcohol having 1 to 8 carbon atoms, and (iii) optionally a vinyl group containing material selected from the groups consisting of a vinyl aromatic monomer of N-vinylpyrrolidone and N vinylcaprolactame, said component having a Tg of 30 °C to 100 °C, component B comprises an aliphatic polyester diol with a weight-average molecular weight less than 20000, and a component C consisting essentially of a polyfunctional isocyanate or blocked polyfunctional isocyanate. WO02/31016 describes a coated sheet in which the coating composition comprises an urethane polymer component and an acrylic copolymer component and further comprises a plurality of cross-linker.

### SUMMARY

In one aspect, the present invention provides an environmentally friendly laminate structure having improved properties such as improved print properties, structural properties, or both. The laminate structure may exhibit good durability, scratch resistance, high quality printability while also being environmentally friendly, excellent conformability and repositionability characteristics, or any combination thereof.

In one aspect, the present invention provides a laminate structure comprising a print film comprising a print layer, the print layer comprising an emulsion polymer chosen from a vinyl acetate containing polymer, a blend of vinyl acetate with vinyl acetate ethylene, an all acrylic formulation, a vinyl acetate ethylene emulsion, a vinyl acetate homopolymer, vinyl acetate copolymer, a mixture of vinyl acetate homopolymer and vinyl acetate copolymer, an acrylic copolymer or its mixture with a vinyl acetate ethylene copolymer, a vinyl acetate ethylene and acrylic hybrid, a polyurethane containing polymer, a mixture of an acrylic copolymer with a polyurethane containing polymer, or a combination of two or more thereof; and an overlaminate film overlying an upper surface of the print film, the overlaminate film comprising a polymer chosen from a polyurethane, a polyurethane acrylic copolymer, a polyurethane-acrylic blend, a urethane-acrylic hybrid copolymer, an acrylic copolymer, mixture of acrylics, or a combination of two or more thereof.

In another aspect, the present invention provides a self adhesive laminate structure comprising a print film comprising (1) an adhesive layer, (2) a support layer disposed over the adhesive layer, and (3) a print layer disposed over the support layer, the support layer comprising a cross-linkable vinyl acetate copolymer, a VAE emulsion, a polyurethane emulsion, an acrylic latex, or a combination of two or more therof; the print layer comprising a vinyl acetate containing polymer, a blend of vinyl acetate with vinyl acetate ethylene, an all acrylic formulation, a vinyl acetate ethylene emulsion, a vinyl acetate homopolymer, vinyl acetate copolymer, a mixture of vinyl acetate homopolymer and vinyl acetate copolymer, an acrylic copolymer or its mixture with a vinyl acetate ethylene copolymer, a vinyl acetate ethylene and acrylic hybrid, a mixture of an acrylic copolymer with a polyurethane containing a polymer, a polyurethane containing polymer, an acrylic copolymer emulsion, or a combination of two or more thereof; and an overlaminate film overlying the print film, the overlaminate film comprising (1) a top layer comprising a polyurethane, a polyurethyane-acrylic copolymer, a polyurethane-acrylic blend, a urethane-acrylic hybrid polymer, or a combination of two or more thereof, and (2) a bottom layer comprising a non-PVC based polymer.

In one aspect, the laminate structure includes the print layer comprises a polymeric film doped with a low surface energy additive such as, for example, a silicone material. A polymeric print film doped with a silicone additive has been found to provide a film exhibiting excellent print characteristics over a wide array of printing techniques and technologies.

In one embodiment the print film further comprises an adhesive layer.

The overlaminate material comprises a polymeric material. The overlaminate material may further comprise a functional material. The print film and the overlaminate film may be formed from non-PVC materials. The combination of the print film and the overlaminate provide a laminate structure exhibiting excellent printing characteristics as well as good conformability, durability, and repositionability characteristics such that the laminates are well suited for use in graphics applications.

In another aspect, the present invention provides, a method for making a laminate structure comprising forming a print layer onto a substrate from a print layer composition comprising a polymer material chosen from a vinyl acetate containing polymer, a blend of vinyl acetate with vinyl acetate ethylene, an all acrylic formulation, a vinyl acetate ethylene emulsion, a vinyl acetate homopolymer, vinyl acetate copolymer, a mixture of vinyl acetate homopolymer and vinyl acetate copolymer, an acrylic copolymer or its mixture with a vinyl acetate ethylene copolymer, a vinyl acetate ethylene and acrylic hybrid, a polyurethane containing polymer, a mixture of an acrylic copolymer with a polyurethane containing a polymer, or a combination of two or more thereof; forming a support layer over a surface of the print layer from a support layer composition; and laminating an overlaminate film to an upper surface of the print layer.

### DESCRIPTION OF THE DRAWINGS

Objects and advantages together with the operation of the invention may be better understood by reference to the following detailed description taken in connection with the following illustrations, wherein:
FIG. 1 is a cross-sectional view of a laminate structure in accordance with an embodiment of the invention;
FIG. 2 is a cross-sectional view of an embodiment of a print film for use in a laminate structure in accordance with embodiments of the invention;
FIG. 3 is a cross-sectional view of a laminate structure in accordance with aspects of the invention;
FIG. 4 is a cross-sectional view of an embodiment of a laminate structure comprising a functional coating overlying the overlaminate film;
FIG. 5 is a cross-sectional view of a laminate structure in accordance with an embodiment of the present invention;
FIG. 6 is a cross-sectional view of an embodiment of an overlaminate film suitable for use in a laminate structure in accordance with aspects of the present invention; and
FIG. 7 is a cross-sectional view of one embodiment of a graphic laminate structure in accordance with aspects of the invention.

### DETAILED DESCRIPTION

Reference will now be made in detail to exemplary embodiments of the present invention, examples of which are illustrated in the accompanying drawings. It is to be understood that other embodiments may be utilized and structural and functional changes may be made without departing from the respective scope of the invention. Moreover, features of the various embodiments may be combined or altered without departing from the scope of the invention. As such, the following description is presented by way of illustration only and should not limit in any way the various alternatives and modifications that may be made to the illustrated embodiments and still be within the spirit and scope of the invention.

The present invention provides various compositions, films made from the compositions, film laminates, and related methods of making and using the compositions and laminates.

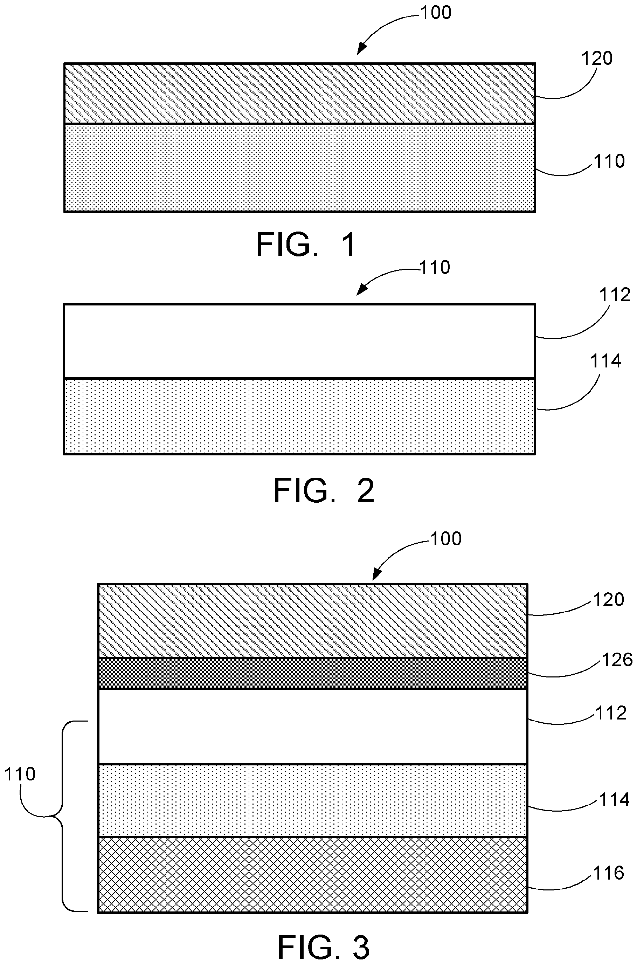

FIGS. 1-6 represent non-limiting embodiments of laminate films and component layers and structures for use in such films in accordance with aspects of the present invention. The present invention provides, in one aspect, a laminate structure 100 comprising a print film 110 and a protective layer 120 overlying the print film (FIG. 1). As used herein, a protective layer (e.g., layer 120) may also be referred to as an overlaminate film. The print film 110 may exhibit excellent properties including, but not limited to, good printability, excellent print receptivity to various printing materials, conformability, low shrinkage, durability, and combinations of two or more thereof. The print film 110 comprises a material receptive to an ink or other material suitable for forming an image.

It will be appreciated that the print film 110 and overlaminate film 120 may each be comprised of one, two or more layers. In one embodiment, as shown in FIG. 2, a print film 110 may comprise a print layer 112 and a support layer 114 disposed on a bottom surface of the print layer 112. The print layer comprises and upper surface (also referred to herein as a print surface) that is adapted to receive an ink or suitable print material for forming an image on the print surface.

As shown in FIG. 3, the multi-layer print film of FIG. 2 may be incorporated into the laminate structure 100 to provide a laminate structure 100 having a print film 110 comprising a print layer 112 and a support layer 114 where the overlaminate 120 is disposed on an upper surface of the print layer 112. An overlaminate adhesive layer 126 is disposed on the overlaminate film 120 to enable the overlaminate film 120 to be laminated to the print film 110. Examples of the overlaminate adhesive layer include, but are not limited to, pressure sensitive adhesives. As also shown in FIG. 3, the print film 110 may further comprise an adhesive layer 116 disposed on a bottom surface of the support layer 114.

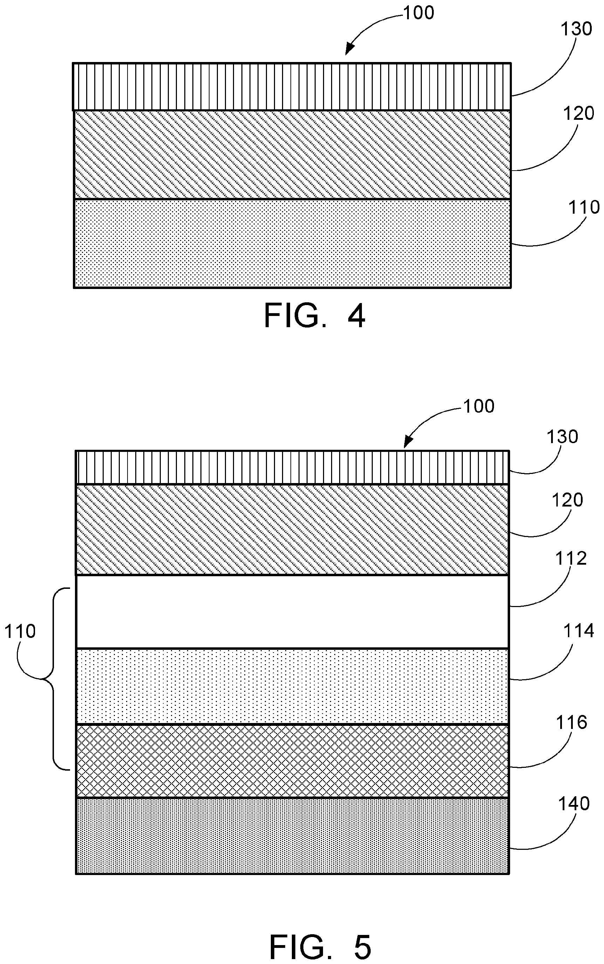

FIG. 4 shows another embodiment of a laminate structure 100 having a print film 110, an overlaminate film 120 and a functional coating 130 disposed about an upper surface of the overlaminate film 120.

FIG. 5 shows an embodiment of a laminate structure 100 having a print film 110, an overlaminate film 120, a functional coating 130, and a release liner 140, wherein the print film comprises a print layer 112, a support layer 114, and an adhesive layer 116. While not shown in FIGS. 1 or 5, it will be appreciated that the laminate may include any tie layers or adhesive layers as desired to adhere adjacent layers to one another. For example, the overlaminate film may include an adhesive layer on a lower surface thereof to facilitate laminating the overlaminate film to the print film.

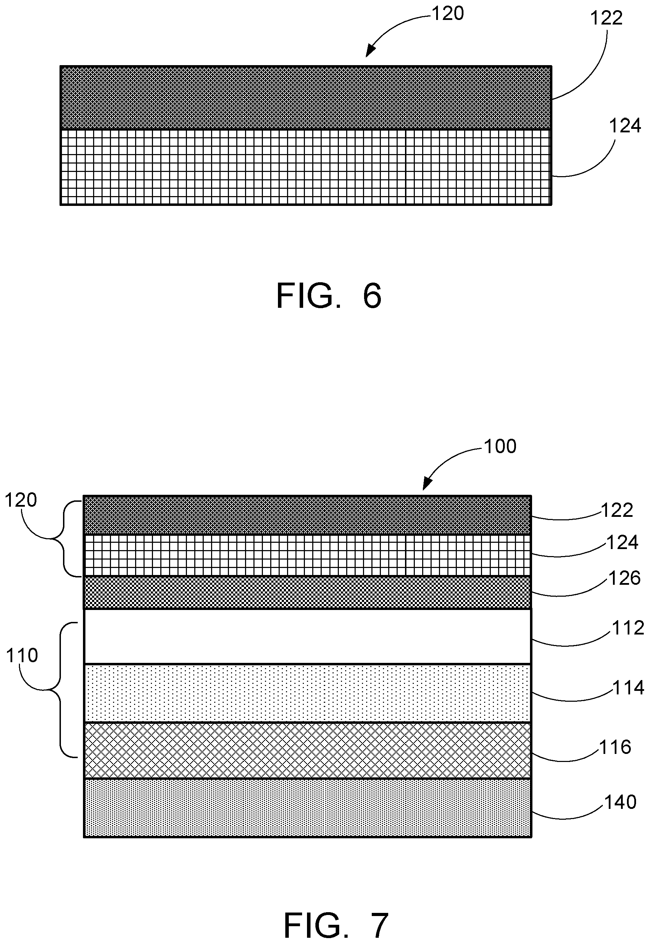

FIG. 6 is an embodiment of an overlaminate film 120 that may be used in a laminate in accordance with the present invention including, but not limited to, the embodiments illustrated in FIGS. 1, 3, 4, and 5. The overlaminate film 120 in FIG. 6 comprises a top layer 122 and a bottom layer 124 disposed on a bottom surface of the top layer 122.

FIG. 7 is another embodiment of a laminate in accordance with aspects of the present invention. Laminate 100 includes a print film 110 and an overlaminate film 120 disposed over an upper surface of the print film. Print film 110 comprises a print layer 112, a support layer 114 disposed on a lower surface of print layer 112, and an adhesive layer 116 disposed on a lower surface of the support layer 114. Overlaminate film 120 comprises an upper layer 122, a bottom layer 124 disposed on a lower surface of upper layer 122, and an adhesive layer 126 disposed on a lower surface of the bottom layer 124. The overlaminate film 120 is laminated or bonded to the print film via adhesive layer 126. The film further includes a removable release liner 140 covering the adhesive layer 116, and which may protect the adhesive layer 116 during storage and until the laminate is ready for application to a surface.

The print layer 112 is a film formed from a polymer or emulsion composition comprising a vinyl acetate containing polymer, a blend of vinyl acetate with vinyl acetate ethylene ("VAE"), an all acrylic formulation, a VAE emulsion, a vinyl acetate homopolymer, a vinyl acetate copolymer, a mixture of a vinyl acetate homopolymer and a vinyl acetate copolymer, an acrylic copolymer, a mixture of an acrylic copolymer with a VAE copolymer, a VAE and acrylic hybrid, a mixture of an acrylic copolymer with a polyurethane containing a polymer, a polyurethane containing polymer, and combinations two or more thereof. Non-limiting examples of suitable polymeric materials for the print layer include acrylic resins such as those sold under the trade name Rhoplex, available from Dow, and Hycar resins available from Lubrizol.

In one embodiment, the carboxyl containing components of the print layer are crosslinkable using polyaziridine, for example, CX-100 from DSM NeoResins. The hydroxy containing components are crosslinkable using polyaziridine or melamine formaldehyde, e.g. CYMEL 385 from Cytec Industries Inc. Other crosslinkers known to the skilled in the art can also be used to cross link the print layer components such as, but not limited to, polyisocyanate.

In one embodiment, the print film or the print layer may comprise a small amount of vinyl halide polymer or copolymer. The amount of polyvinyl halide or its copolymer incorporated in to the print film or print layer may be chosen as desired for a particular purpose or intended use. In one embodiment, polyvinyl halide or its copolymer may be added to the print layer in a concentration sufficient to enhance certain properties of the print layer such as the printability, flexibility, conformability, and durability. Examples of suitable vinyl halides polymer or its copolymer include, but are not limited to, polyvinyl chloride, vinyl acetate ethylene vinyl chloride terpolymer, and polyvinylidene chloride copolymer. In one embodiment, the print film (or the print layer) may comprise up to about 90% by weight of a vinyl halide.

In another embodiment, the print layer may be provided such that the vinyl halide concentration is limited to correspond with "green" initiatives to reduce the use of vinyl halides and provide environmentally friendly laminates. In one embodiment the concentration of vinyl halide in the polymeric material is less than 15%. In another embodiment the concentration of vinyl halide in the polymeric material is less than 10%. In another embodiment the concentration of vinyl halide in the polymeric material is less than 5%. In one embodiment, the polymeric material is substantially free of vinyl halides.

In one embodiment, the print layer comprises a low surface energy additive. Doping the print layer with a low surface energy additive, such as a silicone material, chosen from a siloxane, a silane, or a combination provides the print layer with improved properties including printability by a wide range of print technologies, uniform printing quality, without negatively impacting other physical or mechanical properties of the film such as low shrinkage, conformability, and durability. Suitable low surface energy materials for the print layer include, but are not limited to, fluorinated compounds and silicone-containing materials. In one embodiment, the low surface energy material is a silicone-containing material chosen from a high MW silicone dispersion with silanol functional group, multifunctional self crosslinkable water soluble siloxane, polydimethyl siloxane emulsion, or combinations of two or more thereof. The low surface energy additives, such as the silicone-containing additives, may be blended with or grafted onto the polymeric material of the print layer. Examples of silicone additives that may be included in the print layer include, but are not limited to, Silres BS 4004, Silres BS 50, Silres BS 3003, Silres Creme N, Silres BS 1001, Silres MP 50 E, Silres BS 2002, Silres BS 54, Silres BS 45, Silres BS 43 N, Silres BS 1306, Silres BS 29, Silres BS 1042 (reactive PDMS), Silres BS Creme C, Silres BS 46, and Silres BS 1006 from Wacker Chemie AG. Other examples of silicone additives that may be included in the print layer include, but are not limited to, aqueous dispersions comprising blends of silicones and fluoro-oligomers or polymers and aqueous dispersions of fluoro-oligomers or polymers.

In one embodiment, the print layer may comprise silicone of 3% atomic weight on the surface of the print layer. In one embodiment, the concentration of surface Si atoms is about 4 atomic % or greater. In another embodiment, the concentration of surface Si atoms is about 5 atomic % or greater. In still another embodiment, the concentration of surface Si atoms is about 10 atomic % or greater. In one embodiment, the concentration of surface Si atoms is about 3 atomic % to about 15 atomic %. In one embodiment, the concentration of surface Si atoms is about 4 atomic % to about 12 atomic %. In one embodiment, the concentration of surface Si atoms is about 5 atomic % to about 10 atomic %.

In one embodiment the print layer comprises about 0.1-20% by weight of silicone. In another embodiment the print layer comprises about 2-15% by weight of silicone. In another embodiment the print layer comprises about 5-10% by weight of silicone. In another embodiment the print layer comprises about 0.1-5% by weight of silicone. In another embodiment the print layer comprises about 1% by weight of silicone. In another embodiment the print layer comprises about 5% by weight of silicone. In another embodiment the print layer comprises about 10% by weight of silicone. In another embodiment the print layer comprises about 15% by weight of silicone. In another embodiment the print layer comprises about 20% by weight of silicone. Here, as elsewhere in the specification and claims, numerical values may be combined to form additional or non-discloses ranges.

In another embodiment, the print layer may further comprise other additives as desired for a particular purpose or intended use. Examples of other additives include, but are not limited to, a pigment, a surfactant, a dispersant, a wetting agent, a plasticizer, a defoamer, a coupling agent, thermal stabilizer, a solvent, coalescing agents, a UV absorber, a fire retardant, a light stabilizer and combinations of two or more thereof. In one embodiment, the print layer may comprise a pigment such as, for example, titanium dioxide (TiO₂), latex such as ROPAQUE OP-96 or ULTRA-OPAQUE, available from Dow. In another embodiment, pigment like TiO₂ may not be included if a clear film is desired. In a further embodiment, CYMEL 385 by Cytec Industries Inc. of West Paterson, New Jersey can be used as a cross-linker to increase the tensile strength of the film. In another embodiment used for nonprinting applications, wax emulsion, e.g., MICHEM GUARD 55 from Michelman of Cincinnati, Ohio, can be added to any of the above ten embodiments of composition and film, thereby providing the property of ease-of-cleaning to the film. In yet another embodiment, wax emulsion, e.g., MICHEM EMULSION 47950 from Michelman can be added to any of the above ten embodiments of composition and film of the present invention, and the manufactured film can be useful for anti-graffiti applications.

Images may be printed or imaged on the by any method known in the art. Examples of printing or imaging images on the print layer include, but are not limited to, conventional methods such as by ink jet, screen printing, thermal transfer printing, sublimation printing, and electrostatic printing technologies. Examples of suitable inks include, but are not limited to, latex inks, UV inks, eco-solvent inks, solvent inks. Examples of suitable screen inks include, but are not limited to, solvent screen and UV screen.

As previously described, the print film may comprise a support layer disposed on a bottom surface of the print layer. Examples of materials used in the support layer 114 include, but are not limited to, emulsions of cross linkable vinyl acetate copolymer with a VAE, a polyurethane, neoprene, Buna-N rubber, fluro elastomers, SBR rubber, natural rubber, butyl isobutylene/isoprene rubber, urethane, an acrylic polymer, or a combination of two or more thereof. Examples of suitable materials include, VAE resins such as VINAC resins from Celanese, and VINNAPAS resins from Wacker..

The adhesive layer, is not particularly limited, but may comprise any suitable adhesive material such as, but not limited to, petroleum based adhesive, or renewable bio-based adhesive; a pressure sensitive adhesive, glue, or hotmelt; solvent, emulsion, UV curable, or radiation curable; high solid, permanent, removable or any other type of adhesives. The adhesive layer may be pattern coated, slot die, curtain coating, and may be selected for particular properties such as permanent adhesion, removability or repositionability and the like.

The adhesive may be random copolymer adhesives or block copolymer adhesives. Random copolymer adhesives include those based upon acrylic and/or methacrylic copolymers, α-olefin copolymers, siliconee copolymers, chloroprene/acrylonitrile copolymers, and the like. Block copolymer adhesives including those based upon linear block copolymers (i.e., A-B and A-B-A type), branched block copolymers, star block copolymers, grafted or radial block copolymers, and the like, and natural and synthetic rubber adhesives. A description of useful pressure sensitive adhesives can be found in Encyclopedia of Polymer Science and Engineering, Vol. 13. Wiley-Interscience Publishers (New York, 1988). Additional descriptions of useful pressure sensitive adhesives can be found in Encyclopedia of Polymer Science and Technology, Vol. 1, Interscience Publishers (New York, 1964).

Examples of halogen-free adhesives include, but are not limited to, acrylic adhesives such as a hot-melt acrylic adhesive and a water-based latex acrylic adhesive. Other halogen-free adhesives include hot-melt rubber adhesive, siliconee adhesive, thermoplastic elastomers, other halogen-free adhesives known in the art, and any combination of any of these in any proportion.

Examples of suitable bio-based adhesives include, but are not limited to, the adhesives disclosed in U.S. Patent App. No. 12/599,693, which is incorporated herein by reference in its entirety.

In one embodiment, the adhesive may be configured with a lower surface that is patterned with a plurality of non-adhesive regions and/or configured with a plurality of channels to provide air egress pathways. Such adhesive configurations provide an adhesive having a sufficiently low initial tack that aids in repositioning of the laminate. Examples of suitable patterned adhesive layers include, but are not limited to, adhesive layer configurations such as those described in U.S. Patent Nos. 6,630,049, 7,332,205, and 7,344,618, and U.S. Patent Application Ser. No. 11/757,535, each of which is incorporated herein by reference in its entirety.

In another embodiment, the adhesive may be an activatable adhesive. An example of an activatable adhesive is an adhesive that is not tacky before activation but becomes tacky upon activation as listed in International Patent Application No. PCT/US2010/047428 which is incorporated herein by reference in its entirety. In another embodiment, the adhesive may also further be debonded on demand as disclosed in International Patent Application No. PCT/US2010/032610 which is incorporated herein by reference in its entirety.

It will be appreciated that each of the above described adhesives may be provided as solvent based, emulsions, hotmelt adhesives, UV curable, or radiation curable. Additionally, each of the adhesives may be made removable or permanent. The system and performance characteristic of the adhesives may be selected as desired for a particular purpose or intended use.

In one embodiment the laminate structure 100 may also comprise a release liner 140 placed on the print film 110, as shown in FIG. 5. When adhesives are used, a release liner may be used to protect the adhesive layer from inadvertent contact with unintended surfaces. Any release liner suitable for the chosen adhesive may be used. For pressure sensitive adhesives, release liners may be coated papers or films, and super calendared paper, for example. Coating materials suitable for release liners include, for example, silicone-based and fluorine-based materials, or any other material that has the desired releasing properties, for example, waxes and carbamates. The release liner is preferably an ultrathin or ultra light liner having a thickness of less than 1.02 mil (0.026 mm), less than 1 mil (0.0254 mm), less than 0.8 mil (0.0203 mm), less than 0.6 mil (0.015 mm), less than 0.50 mil (0.013 mm), or equal to or less than 0.25 mil (0.00626 mm). Such thin liners are commercially available as HOSTAPHAN® polyester film (e.g., 0.5 mil, 0.0127 mm, tradename 2SLK silicone coated film) sheeting from Mitsubishi Chemical Company of Tokyo Japan. Another liner material is provided by Avery Dennison Corporation of Pasadena, California as a 1.02 mil (0.026 mm) polyester backing sheet with a 1.25 mil (0.032 mm) adhesive layer.

In an alternative embodiment, instead of doping the print layer with silicone, the back side of the release liner is corona treated before the print layer surface comes into contact with the back side of the release liner upon rolling. Corona treating the back side of the release liner converts free silicone to silicate which prevents the back side of the release liner from contaminating the print layer surface upon rolling.

In one embodiment the print film comprises a print layer and a support layer wherein the print and the support layers comprise the following: the print layer comprises a blend of two acrylic resins, a surfactant, a wetting agent, a dispersion agent, a pigment package, a flurosurfactant, a defoamer, an optical brightener, a thickener, water, a second thickener, and polysiloxane. The support layer comprises VA copolymer resins, water, a defoamer, and a flurosurfactant.

The overlaminate film 120 may provide the laminate with a desired level of protection for the underlying print layer carrying the printed image or graphic display. In a non-limiting example, the overlaminate film may be used for outdoor graphics applications, advertising, promotions and other marketing campaigns. The film laminate provides suitable outdoor durability, scratch resistance, gloss, conformability, tensile elongation and tensile strength.

The overlaminate film may be formed from any suitable polymeric composition capable of providing a film having the desired properties. In one embodiment, the overlaminate film is formed from a non-PVC material for use in such applications. Examples of the overlaminate film are described in U.S. Patent Application 13/040,642, which is incorporated herein by reference in its entirety.

In the embodiment shown in FIG. 6, the overlaminate film 120 comprises a top layer 122 and a bottom layer 124. The top layer may be made of polyurethane, polyurethane-acrylic copolymer, polyurethane-acrylic blend or polyurethane-acrylic hybrid polymer. The bottom layer may include a non-PVC emulsion based polymer. Generally, the non-PVC based polymer may be an emulsion based polymer, a solvent based polymer, and/or an extruded polymer. In certain embodiments, the non-PVC based polymer is an acrylic polymer. In one embodiment, the top layer 122 may be a urethane-acrylic hybrid polymer. In one embodiment, the bottom layer 124 may be a strengthening polymer layer.

The urethane-acrylic hybrid polymer of the top layer 122 may be a combination of urethane polymer and acrylic polymer mixed at the molecular level. In order to be environmentally friendly, the top layer 122 may be created from waterborne dispersions, although other methods for producing the urethane-acrylic hybrid polymer may also be used. Typically, there are two methods to make such hybrid polymer dispersions. In a first method, a polyurethane dispersion is prepared. Acrylic monomers are then added to the polyurethane dispersion. The acrylic polymer is formed in the presence of the polyurethane dispersion. In a second method, a polyurethane prepolymer is formed. The acrylic monomers are then added to the prepolymer. The urethane and acrylic polymerizations are completed concurrently. The methods of making such materials are described, for example, in United States Patent Nos. 3,684,758; 4,198,330; 4,644,030; and 5,594,065, which are each incorporated by reference herein in their entireties.

The urethane-acrylic hybrid polymer dispersions prepared according to the above described methods have been found to show better mechanical properties when compared to a simple blend of the two polymers due to the molecular level mixing which occurs through use of the foregoing processes. In order to make the formulation even more environmentally friendly, that is to reduce the environmental impact over other preparations, the urethane-acrylic hybrid polymer dispersions can be further improved to be free of N-methylpyrrolidone (NMP), a component typically used as a processing solvent in other applications.

Suitable urethane-acrylic hybrid polymer dispersions for use in the overlaminate film include those with aliphatic acrylic monomers and aliphatic polyurethane components. As the overlaminate film products produced will be used in an outdoor environment, the overlaminate film will be exposed to moisture, such as dew, rain or snow; temperature deviations; light and other conditions which may impact the overlaminate film performance. For example, moisture may cause components of the overlaminate film or images thereon to bleach out or fade, and the overlaminate film itself to whiten. Therefore, maintaining a proper balance of hydrophilic monomers and other components may be required in order for this overlaminate film to achieve the required resistance when exposed to such conditions. The monomers and other components should also be selected so as to be balanced to achieve the required tensile properties, block resistance, scratch resistance, transparency, and gloss. For example, the amount of acrylic present in the urethane-acrylic hybrid polymer controls the tensile properties of this top layer.

Suitable urethane-acrylic hybrid dispersions for use in the present invention are available under the trade name HYBRIDUR from Air Products, Allentown, Pennsylvania, including HYBRIDUR 870; HYBRIDUR 570; HYBRIDUR 580; HYBRIDUR 878; and NEOPAC R9000 from DSM NeoResins, of Waalwijk, The Netherlands.

In one embodiment, when acrylic polymers are used in the bottom layer 124, the acrylic polymers can be the same or different from those used in the top layer 122. Both aliphatic and aromatic acrylics can be suitable for inclusion in the bottom layer. Suitable acrylic polymers include acrylic emulsions that have superior block resistance, tensile properties and clarity, such as JONCRYL 617A available from BASF, and JONCRYL 1987 available from BASF, Ludwigshafen, Germany.

The overlaminate film, and each of the layers forming the overlaminate film, may include any suitable additive as desired to impart a particular property to the overlaminate film. The overlaminate film may be transparent, translucent, clear or have other desirable optical properties. In addition, the top and bottom layers may have at least one additive added to either one or both, or two additives added to one or both of the layers. If, as provided in another embodiment (not shown), an intermediate layer is included between the top and bottom layers the additive may also be present in the intermediate layer. The additives are selected from a group including UV stabilizing agents, free-radical scavengers, cross-linking agents, thickeners, flow and leveling agents, rheology modifiers, surfactants, defoamers, dispersants, wetting agents, dyes, pigments, co-solvents or combinations thereof.

UV blocking agents and free radical scavengers can be added to the top layer to improve the outdoor durability. UV blocking agents suitable for this application are typically benzotrizole based compounds, or other compounds capable of absorbing UV energy in the required region. Commercially available UV absorbing agents include, without limitation, TINUVIN 400 DW, TINUVIN 292 from BASF, Ludwigshafen, Germany; and HOSTAVIN 3310 from Clariant; Muttenz, Switzerland. The amount of UV blocking agent can range from about 0% to about 5%.

Free radical scavengers may also be added to the top layer of the overlaminate film to improve the weather durability of the top layer. Suitable free radical scavengers include but are not limited to TINUVIN 1130, TINUVIN 123 DW from BASF, Ludwigshafen, Germany; and HOSTAVIN 3065 from Clariant, Muttenz, Switzerland. The amount of free radical scavengers can range from about 0% to about 5%.

Other UV blocking systems may also be used for improving weathering durability of the overlaminate film. These include nano sized zinc oxide and cerium oxide or combinations thereof which may be used to achieve the UV resistance required for the overlaminate film. Suitable nano metal oxides include but are not limited to NANOBYK 3840, NANOBYK 3810 from BYK Additives, of Altana, Wesel, Germany. The total amount of additives may range from about 0% to about 10%.

In one embodiment of the overlaminate film 120, the bottom layer 124 may have a polymer layer that improves tensile properties of the overlaminate film 120. Examples of such strengthening polymer layer include, without limitation, emulsion based polymers, and solvent based polymers, and extruded polymers. Suitable polymers include, without limitation, acrylic polymers, styrene acrylic polymers, vinyl acetate ethylene copolymers, and polyolefins. UV stabilizers and free radical scavengers can also be added to the bottom layer. The additives together may range from about 0% to about 5% of the total formulation.

In one embodiment, an overlaminate adhesive layer 126 may be placed on the overlaminate film. The overlaminate adhesive layer enables the overlaminate film to be laminated with the print film. Examples of the overlaminate adhesive layer include, but are not limited to, pressure sensitive adhesives or any other suitable adhesive including those previously described herein.

In one embodiment the overlaminate film may also comprise a functional material blended in the overlaminate film such as, but not limited to, an anti-graffiti material. Examples of the functional material include, but are not limited to, coatings based on polyurethanes, nano-particles, fluorinated hydrocarbons, and siloxanes.

In another embodiment, as shown in FIGS. 4-5, a functional coating 130 is placed over the overlaminate film 120. The functional coating may be a film comprising a desired functional material such as, but not limited to, an anti-graffiti material. In one embodiment, the functional coating may reflect heat or infrared.

The laminate structure may have a thickness as desired to provide a laminate having suitable characteristics and properties as desired for a particular purpose or intended use. In one embodiment, the laminate structure has an overall thickness of from about 1.5 mils to about 15 mils (about 35 microns to about 350 microns). In another embodiment, the laminate structure has an overall thickness of from about 3 mils to about 10 mils (about 70 microns to about 254 microns). In still another embodiment, the laminate structure has an overall thickness of from about 5 mils to about 8 mils (about 120 microns to about 205 microns).

In one embodiment, the thickness of the print layer is from about 0.8 mils to about 2.0 (about 20 microns to about 50 microns). In another embodiment, the thickness of the support layer is from about 1.2 mils to about 1.6 mils (about 30 microns to about 40 microns).

In one embodiment, the support layer may have a thickness of about 0.1 mils to about 5.0 mils (about 2.5 microns to about 127 microns). In another embodiment the support layer may have a thickness of about 0.2 mils to about 2.0 mils (about 5 microns to about 50 microns). In another embodiment the support layer may have a thickness of about 0.5 mils to about 1.2 mils (about 12 microns to about 30 microns). Here, as elsewhere in the specification and claims, numerical values may be combined to form additional or non-discloses ranges. In still another embodiment the support layer may have a thickness less than about 1.2 mils (30 microns). Applicants have found that in embodiments employing a support layer with a thickness layer less than 1.2 mils (30 microns) provided a print film with excellent properties including long term removability and repositionability properties as well as a film that is less susceptible to tearing or breaking.

The thickness of the top layer 122 may range from about 0.2 mils to about 5 mils. The thickness of the bottom layer 124 may range from about 0.2 mils (12.7 microns) to about 5 mils (127 microns). Here, as elsewhere in the specification and claims, numerical values may be combined to form additional or non-discloses ranges. When the thickness of the top layer 102 is too thin, the chemical resistance, scratch resistance and outdoor durability of the film may suffer. When the thickness of the bottom layer 124 is too thin, the tensile properties of the whole film may not be sufficient. Contrary to the above, when the top and bottom layers 122, 124 respectively, are too thick, the thickness of the construction may also impact the conformability of the film.

In one embodiment, the print film and the overlaminate film may be formulated to be a single layer film with the correct selection of copolymers as listed above.

The laminate and the respective film layers may be formed by any suitable method for forming a film layer. Such methods include, but are not limited to, curtain coating, gravure coating, reverse graver coating, offset gravure coating, roller coating, knife-over roll coating, air knife coating, metering rod coating, reverse roll coating, die coating, etc. or any other suitable method known in the art or later discovered to provide a film coating. In one embodiment, a laminate structure may be formed by sequentially coating the layers to provide the desired structure. This may be done by providing a substrate, e.g., a polyethylene terephthalate (PET) film, and coating the layers starting with the outer most layer of the overlaminate structure, followed by coating the desired layers of the print film, and then subsequently applying an adhesive film layer.

In another embodiment, the print film and the overlaminate films may be separately constructed and then subsequently laminated together to provide the desired structure. It will be appreciated that a desired graphic display will be printed on the upper surface of the print layer prior to laminating the print film and the overlaminate film together. Additionally, it will be appreciated that any suitable tie layers or adhesive layers may be provided on the overlaminate film to sufficiently laminate the print film and the overlaminate together.

The print film may be formed by preparing a liquid formulation or emulsion of an embodiment of composition of the present invention and then coating, such as by curtain coating, a substrate with the formulation or emulsion. In one embodiment, the substrate is a liner. In another embodiment, the substrate is a PET film.

In one embodiment, the first step of a method of making a print film is to provide print layer and support layer components and a substrate. Next, the respective components are separately blended to form a print layer composition and support layer composition, respectively. Next, a carrier substrate is coated with the print layer and dried, and the material is then coated with the support layer onto the print layer. Then the print layer and support layer are dried to form a print film. Afterwards, the dried print film is removed from the carrier substrate. These two coatings can be applied in a single process step or multiple process step to develop the desired construction.

After the print film is dried, adhesives may be applied to one or both major surfaces of the print film construction to form an adhesive layer and support layer using known processes, such as, for example, adhesive lamination. Release liners for use in the present invention may be those known in the art or those later discovered. In general, suitable release liners include, but are not limited to, polyethylene coated papers with a commercial silicone release coating, polyethylene coated polyethylene terephthalate films with a commercial silicone release coating, or cast polypropylene films that can be embossed with a pattern or patterns while making such films, and thereafter coated with a commercial silicone release coating. An exemplary release liner is kraft paper which has a coating of low density polyethylene on the front side with a silicone release coating and a coating of high density polyethylene or polypropylene on the back side. Other release liners known in the art are also suitable as long as they are selected for their release characteristics relative to the pressure sensitive adhesive chosen for use in the adhesive article, that is, the adhesive will have a greater affinity for the face stock than the liner. In one embodiment, the release liner has a moldable layer of polymer under the release coating. The moldable layer is typically a polyolefin, such as polyethylene or polypropylene. The surface of the release layer of the release liner may have a textured finish, a smooth finish, or a patterned finish. The release layer may have a randomly microstructured surface such as a matte finish, or have a pattern of three-dimensional microstructures. The microstructures may have a cross-section which is made up of circles, ovals, diamonds, squares, rectangles, triangles, polygons, lines or irregular shapes, when the cross-section is taken parallel to the surface of the release surface. A method of making an overlaminate film is to provide the top layer components and a removable support. Next, the top layer components are blended to form a top layer composition. Next, the removable support is coated with the top layer composition, such as by slot die coating, curtain coating or other acceptable methods. Then, the top layer composition is dried. Drying may occur by using a heated or ambient air environment, curing or by other suitable methods.

Next, the bottom layer components are provided. The bottom layer components are blended to form a bottom layer composition. The bottom layer composition is coated over the top layer by any means known in the art such as, but not limited to, slot die coating. Then the bottom layer composition is dried. Alternatively, the film is further laminated with a pressure sensitive adhesive (PSA) coated release liner before proceeding to the next step. Next, the removable support is removed or separated from the dried two layer film. The separation or removal may be performed by any means known in the art such as, but not limited to, a peel blade or knife which serves to separate the film from the carrier or support layer. Alternatively, the film can be separated by the carrier at a sharp angle so that the film can be easily picked up from the carrier or support. Then, the overlaminate film is rolled up and ready for use. Alternatively, the film can be cut and separated into sheets or sections of equivalent sizes or of varying lengths.

The top layer and the bottom layer are substantially coextensive with one another, that is the edges and/or sides are aligned and in juxtaposition. It is of course possible that the top layer could be applied in a pattern over the bottom layer so that the layers are not completely juxtaposed on one another.

In another embodiment of the invention, the compositions of the top layer and the bottom layer may be coated onto a removable support simultaneously. The first step is to provide the top layer components, the bottom layer components and a removable support. Next, the top layer components are blended to form a top layer composition. Substantially, simultaneously, the bottom layer components are blended to form a bottom layer composition. Next, the top layer composition and the bottom layer composition are coated simultaneously using a any suitable coating technique including dual die coating, reverse roll, gravure, as well as curtain coating, and non contact coating such as spray coating. The layers are coated such that the top layer composition contacts the removable support and the bottom layer composition contacts the top layer composition. Additionally, the top layer and bottom layer may be formed separately and then extruded or coated on to the support or carrier through a common apparatus. Then the coated compositions are dried. Alternatively, the film is further laminated with a PSA coated release liner before proceeding to the next step. After drying of the compositions, the removable support or carrier layer may be removed from the dried two layer film. The film may be rolled up and ready for use or sheeted depending on the requirements of the particular application.

In addition to the foregoing, the film can be further overcoated with a varnish or other material to provide a glossy appearance. This step may occur during the film forming process, after printing or after collection of the material after the production process has been completed.

Once the print film and the overlaminate film are formed, an overlaminate adhesive layer may be placed on the overlaminate film. The overlaminate adhesive layer enables the overlaminate film to be laminated with the print film. Then the overlaminate film with the overlaminate adhesive layer can be placed on the printed film to form the graphics laminate structure when needed. The overlaminate film may be placed on the print film by any means known in the art.

### Test Methods

The properties of the laminate structure and print film of the present invention can be characterized by various analytical techniques. A brief description of these analytical techniques is given below:

### Tensile Elongation

The tensile elongation of the print film is tested using mechanical properties measurement techniques, e.g., Instron. A modified ASTM D882 was used to determine the tensile strength and percentage elongation of the films of the present invention. The procedure is as follows:
1. A 1" x 8 specimen was cut out in the machine direction.
2. Grip the film 1" from the end at both the ends, so the separation between the grips is 2 inches.
3. Set the crosshead speed at 12 inches per minute ("ipm").
4. Obtain the tensile strength, which is the product of tensile stress times the thickness of the film.
5. The % elongation is reported by the machine.

The standard requires a minimum ultimate elongation of 50% and a minimum tensile strength of 0.5 pound per square inch ("psi"). The presence or absence of PSA on the print film does not appreciably alter the strength and/or elongation of the film. As such, wherever the print film in the examples below includes PSA, the tensile elongation test was performed using film without the layer of PSA.

### Printability

The printability of the print film is tested by printing directly on the film specimen using solvent-based ink-jet printer. Other printing methods can include, for example, solvent screen, eco-solvent, digital, piezo ink-jet, UV screen, and UV ink-jet processes. Next, visual inspection is performed to determine if there was smudging of ink on the surface of the film and diffusion of ink inside the film. Good printing is obtained if there is no smudging and diffusion of ink.

### Durability

The durability of the print film is tested using xenon arc weather-o-meter according to the standards of SAE J1960 (Rev. October 2004). The test method is designed to accelerate extreme environmental conditions such as sunlight, heat, and moisture (in the form of humidity, condensation, or rain) for the purpose of predicting the weatherability of the films. The gloss at 20, 60 and 85 degree are measured as well as LAB scores for color.

### EXAMPLES

The following examples describe the various embodiments of the present invention. Numerous modifications and variations within the scope of the present invention will be apparent to those skilled in the art and the present invention is not limited to the examples given below. Unless otherwise states, all parts, percentages, and ratios reported in the following examples are on a weight basis, and all reagents used in the examples were obtained, or are available, from the chemical supplier identified below, or can be synthesized by conventional techniques.

The following Table 1 provides a list of chemicals that may be used in various, identifying their supplier; function; chemical name, formula or type; percentage solids; and Tg. White pigment comes from American Color.

**Table 1. Suitable Materials Used in Examples**

| **Material Description** | **Supplier** | **Function** | **Chemical** | **% Solids** | **Tg°C** |
|---|---|---|---|---|---|
| ZONYL FS-300 | Du Pont | Surfactant | Flurosurfactant | 40 | |
| TAMOL 731A | Dow | dispersant | hydrophobic copolymer | 25 | |
| AIRFLEX 465 | Wacker | Binder | VAE Emulsion | 67 | -5 |
| VINAC XX-230 | Celanese | Binder | VA Emulsion | 55 | 30 |
| AIRFLEX 323 | Wacker | Binder | VAE Emulsion | 55 | 22 |
| VINAC 890DPN | Celanese | Binder | VA copolymer | 49 | 30 |
| HYCAR 26349 | Lubrizol | Binder | Acrylic Latex | 49 | 12 |
| HYCAR 26348 | Lubrizol | Binder | Acrylic Latex | 48.5 | 30 |
| JONCRYL 617A | BASF | Binder | Acrylic Latex | 45.5 | 7 |
| TINUVIN 1130 | BASF | UV absorber | hydroxyphenyl benzotriazole | | |
| TINUVIN 292 | BASF | light stabilizer | sebacate type | | |
| CYMEL 385 | Cytec Industries Inc. | Crosslinker | Melamine formaldehyde | | |
| EVOCAR LATEX DA-280 | Arkema | Binder | VAE | 55 | 12 |
| TRITON X-405 | Dow | Surfactant | Octylphenol ethoxylate | 70 | |
| TRITON X-45 | Dow | Surfactant | Octylphenol ethoxylate | 100 | |
| XAMA 7 | Lubrizol | Crosslinker | Polyaziridine | 95 | |
| HYCAR 26-1265 | Lubrizol | Binder | Acrylics Ethoxylated polyol | 49 | 23 |
| DISPONIL AFX4030 | BASF | Surfactant | Blend | 30 | |
| RHEOLATE 350 | Elementis | Thickener | Polyurethane | 50 | |
| DEV 5147 | Avery Dennison | Binder | VAE/acrylics | 60 | 12-40 |

The chemicals that may be used are further described below.
AIRFLEX 465: A low viscosity/high solids (67%), polyvinyl alcohol protected Vinyl Acetate-ethylene ("VAE") emulsion with rapid set speed, available from Air Products.
AIRFLEX 323: Polyvinyl alcohol protected VAE emulsion, with standard solids (55%), high Tg, and excellent heat resistance, available from Air Products.
DISPONIL AFX 4030: Nonionic surfactant at with 40 moles ethylene oxide at 30% solids, available from Cognis Corporation of Cincinnati, Ohio.
VINAC XX-230: Polyvinyl alcohol protected VA emulsion, with standard solids at 55%, available from Air Products.
VINAC 890DPN: Polyvinyl acetate dispersion containing reactive groups, aluminum chloride hardener and small parts of a coalescence agent. Solids content is 49%, available from Air Products.
VINNAPAS 315: Poly(vinyl alcohol) stabilized vinyl acetate-ethylene copoloymer with a glass transition temperature of 17 °C.
TAMOL 731A: A hydrophobic copolymer dispersant with excellent compatibility and good pigment wetting, available from Dow Chemical.
HYCAR 26349: Surfactant protected acrylic latex at 49% solids and 12oC Tg, for durable coating/adhesives, available from The Lubrizol Corporation of Wickliffe, Ohio.
HYCAR 26348: Surfactant protected acrylic latex at 48.5% solids and 30oC Tg, excellent oil and solvent resistance, available from The Lubrizol Corporation.
HYCAR 26-1265: Surfactant protected acrylic latex at 49% solids and 23oC Tg, for ultra water resistance coating/adhesives, available from The Lubrizol Corporation.
HYCAR 265917: Acrylic latex from The Lubrizol Corporation.
JONCRYL 1987: A soft, flexible, softer, more flexible, one pack, self-crosslinking acrylic emulsion that is non-formaldehyde emitting
RHEOLATE 350: A rheological additive from Elementis of London, United Kingdom.
DEV 5147: VAE/acrylic hybrid; Scale-up version of 1277-72.
RHOPLEX Ac-261LF: An acrylic resin from Dow.
SANCURE 899: An aliphatic polyester polyurethane dispersion at 30% solids, provides high gloss for coatings, available from The Lubrizol Corporation.
ZONYL FS-300: A general purpose nonionic fluorosurfactant that is an ideal wetting and leveling agent for aqueous application at 40% solids, available from DuPont of Wilmington, Delaware.
BENZOFLEX 2088: A dipropylene glycol dibenzoate plasticizer, available from Velsicol Chemical Corporation of Rosemont, Illinois.
TINUVIN 1130: A UV absorber of the hydroxyphenyl benzotriazole class, available from Ciba of Basel, Switzerland.
TINUVIN 292: A liquid hindered amine light stabilizer for coating applications, available from Ciba.

### EXAMPLE 1:

A laminate having a structure such as that illustrated in FIG. 7 is prepared by providing (1) a print film comprising a print layer, a support layer, and an adhesive layer, and (2) an overlaminate film comprising a top layer, a bottom layer, and an adhesive layer. The print layer is a compositions comprising from about 50 to about 100 wt. % of an acrylic resin, and may comprise two or more acrylic resins, and from about 0.5 to about 3 wt. of a polysiloxane as a low surface energy additive. The support layer comprises from about 40 to about 60 wt. % of a VAE resin and may comprise about 60 to about 40 wt.% of two or more VA copolymer resins. The print layer and the support layer may also comprise other additives such as fluorosurfactants, thickeners, wetting agents, defoamers, and pigments as desired. The top layer of the overlaminate comprises from about 70 to about 99 wt. % of a urethane hybrid polymer resin. The bottom layer of the overlaminate comprises form about 85 to about 99 wt. % of an acrylic polymer resin. The top and bottom layers may also comprise other additives such as UV screen, thickeners, fluorosurfactants, etc.

The adhesive layer of the print film is S4000, available from Avery Dennison. The adhesive layer of the overlaminate film is S8072 available from Avery Dennison. The respective films are prepared by a coating method as described herein, and the overlaminate film is laminated to the print film by laminating the adhesive layer of the overlaminate film to the upper surface of the print layer.

Although the embodiments of the present invention have been illustrated in the accompanying drawings and described in the foregoing detailed description, it is to be understood that the present invention is not to be limited to just the embodiments disclosed, but that the invention described herein is capable of numerous rearrangements, modifications and substitutions without departing from the scope of the claims hereafter. The claims as follows are intended to include all modifications and alterations insofar as they come within the scope of the claims or the equivalent thereof.

## Claims

1. A laminate structure comprising:
a print film comprising a print layer, the print layer comprising an emulsion polymer chosen from a vinyl acetate containing polymer, a blend of vinyl acetate with vinyl acetate ethylene, an all acrylic formulation, a vinyl acetate ethylene emulsion, a vinyl acetate homopolymer, vinyl acetate copolymer, a mixture of vinyl acetate homopolymer and vinyl acetate copolymer, an acrylic copolymer or its mixture with a vinyl acetate ethylene copolymer, a vinyl acetate ethylene and acrylic hybrid, a polyurethane containing polymer, a mixture of an acrylic copolymer with a polyurethane containing polymer, or a combination of two or more thereof; and
an overlaminate film overlying an upper surface of the print film, the overlaminate film comprising a polymer chosen from a polyurethane, a polyurethane acrylic copolymer, a polyurethane-acrylic blend, a urethane-acrylic hybrid copolymer, an acrylic copolymer, a mixture of acrylics, or a combination of two or more thereof.

2. The laminate structure of claim 1, wherein the print film comprises a support layer disposed on a lower surface of the print layer, preferably wherein the support layer comprises a material chosen from emulsion polymers of cross-linkable vinyl acetate copolymer, a VAE emulsion, a polyurethane emulsion, or a combination of two or more thereof.

3. The laminate structure of claim 1 or 2, wherein said print layer comprises a low surface energy additive, preferably wherein the low surface energy additive is chosen from a fluorinated material, a silicone containing material, or a combination thereof, preferably wherein the low surface energy additive comprises a silicone-containing material chosen from a siloxane, a silane, or a combination thereof.

4. The laminate structure of any one of claims 1 to 3, wherein said print film further comprises an adhesive layer disposed on a lower surface of the print film, comprising a release liner covering the adhesive layer.

5. The laminate structure of any one of claims 1 to 4, wherein said first polymeric material further comprises up to 90% by weight of a vinyl halide.

6. The laminate structure of claim 2, wherein said support layer comprises at least one of the following:
a cross linkable vinyl acetate copolymer with a vinyl acetate ethylene emulsion, a polyurethane emulsion, a blend of polyurethane containing emulsions, an acrylic copolymer emulsion, or a combination of two or more thereof.

7. The laminate structure of any one of claims 1 to 6, wherein the print film comprises an adhesive layer on a lower surface thereof, the adhesive layer being chosen from at least one of petroleum based adhesive, renewable bio-based adhesive, a halogen free adhesive, an acrylic adhesive, or a combination of two or more thereof; each adhesive being chosen from a solvent based adhesive, an emulsion, a hotmelt adhesive, a UV curable adhesive, a radiation curable adhesive, or a combination of two or more thereof; where each adhesive may be provided as a removable adhesive or a permanent adhesive.

8. The laminate structure of claim 2 or 6, wherein said support layer has a thickness of 2.5 microns to 105 microns.

9. A method for making a print film comprising:
forming a print layer onto a substrate from a print layer composition comprising a polymer material selected from the group consisting of a vinyl acetate homopolymer or copolymer or the mixture of, an acrylic copolymer or its mixture with a VAE copolymer, a VAE and acrylic hybrid, a mixture of an acrylic copolymer with a polyurethane containing a polymer, a polyurethane containing polymer, or a combination of two or more thereof; and
forming a support layer over a surface of the print layer from a support layer composition.

10. The method of claim 9, further comprising forming an adhesive layer on a surface of the support layer.

11. A method for making a laminate structure comprising:
forming a print layer onto a substrate from a print layer composition comprising:
a polymer material chosen from a vinyl acetate containing polymer, a blend of vinyl acetate with vinyl acetate ethylene, an all acrylic formulation, a vinyl acetate ethylene emulsion, a vinyl acetate homopolymer, vinyl acetate copolymer, a mixture of vinyl acetate homopolymer and vinyl acetate copolymer, an acrylic copolymer or its mixture with a vinyl acetate ethylene copolymer, a vinyl acetate ethylene and acrylic hybrid, a polyurethane containing polymer, or a combination of two or more thereof;
forming a support layer over a surface of the print layer from a support layer composition;
laminating an overlaminate film to an upper surface of the print layer.

12. The method of claim 11, further comprising providing a functional coating to be placed over the overlaminate film.

13. A self adhesive laminate structure comprising:
a print film comprising (1) an adhesive layer, (2) a support layer disposed over the adhesive layer, and (3) a print layer disposed over the support layer, the support layer comprising a cross-linkable vinyl acetate copolymer, a VAE emulsion, a polyurethane emulsion, or a combination of two or more therof, the print layer comprising a vinyl acetate containing polymer, a blend of vinyl acetate with vinyl acetate ethylene, an all acrylic formulation, a vinyl acetate ethylene emulsion, a vinyl acetate homopolymer, vinyl acetate copolymer, a mixture of vinyl acetate homopolymer and vinyl acetate copolymer, an acrylic copolymer or its mixture with a vinyl acetate ethylene copolymer, a vinyl acetate ethylene and acrylic hybrid, a mixture of an acrylic copolymer with a polyurethane containing a polymer, a polyurethane containing polymer, or a combination of two or more thereof; and
an overlaminate film overlying the print film, the overlaminate film comprising (1) a top layer comprising a polyurethane, a polyurethyane-acrylic copolymer, a polyurethane-acrylic blend, a urethane-acrylic hybrid polymer, or a combination of two or more thereof, and (2) a bottom layer comprising a non-PVC based polymer.

14. The self adhesive laminate of claim 13, wherein:
the print layer comprises at least one acrylic resin;
the support layer comprises at least one VAE resin;
the top layer comprises a urethane hybrid polymer resin; and
the bottom layer comprises an acrylic polymer resin.

15. The self adhesive laminate of claim 13 or 14, wherein the print layer comprises a low surface energy additive chosen from a silicon-containing material.

## Patentansprüche

1. Laminatstruktur, umfassend:
eine Druckfolie, umfassend eine Druckschicht, wobei die Druckschicht ein Emulsionspolymer, ausgewählt aus einem Vinylacetat-enthaltenden Polymer, einem Blend von Vinylacetat mit Vinylacetat-Ethylen, einer Gesamtacryl-Formulierung, einer Vinylacetat-Ethylen-Emulsion, einem Vinylacetathomopolymer, Vinylacetatcopolymer, einem Gemisch von Vinylacetathomopolymer und Vinylacetatcopolymer, einem acrylischen Copolymer und dessen Gemisch mit einem Vinylacetat-Ethylen-Copolymer, einem Vinylacetat-Ethylen- und Acryl-Hybrid, einem Polyurethan-enthaltenden Polymer, einem Gemisch von einem acrylischen Copolymer mit einem Polyurethan-enthaltenden Polymer oder einer Kombination von zwei oder mehreren davon, umfasst und
einer Overlaminat-Folie, welche über einer oberen Oberfläche der Druckfolie liegt, wobei die Overlaminat-Folie ein Polymer, ausgewählt aus einem Polyurethan, einem Polyurethan-Acrylcopolymer, einem Polyurethan-Acryl-Blend, einem Urethan-Acryl-Hybridcopolymer, einem Acrylcopolymer, einem Gemisch von Acrylics oder einer Kombination von zwei oder mehreren davon, umfasst.

2. Laminatstruktur gemäß Anspruch 1, wobei die Druckfolie eine Trägerschicht, angeordnet auf einer unteren Oberfläche der Druckschicht, umfasst, wobei die Trägerschicht vorzugsweise ein Material, ausgewählt aus Emulsionspolymeren von vernetzbarem Vinylacetat-Copolymer, einer VAE Emulsion, einer Polyurethanemulsion oder einer Kombination von zwei oder mehreren davon, umfasst.

3. Laminatstruktur gemäß Anspruch 1 oder 2, wobei die Druckschicht ein Niederoberflächenenergie-Additiv umfaßt, wobei das Niederoberflächenenergie-Additiv vorzugsweise aus einem fluorierten Material, einem Silikonenthaltenden Material oder einer Kombination davon ausgewählt ist, wobei das Niederoberflächenenergie-Additiv vorzugsweise ein Silikon-enthaltendes Material, ausgewählt aus einem Siloxan, einem Silan oder einer Kombination davon, umfaßt.

4. Laminatstruktur gemäß einem der Ansprüche 1 bis 3, wobei die Druckfolie weiter eine Haftmittelschicht, angeordnet auf einer unteren Oberfläche der Druckfolie, umfassend eine Trennschicht, welche die Haftmittelschicht bedeckt, umfasst.

5. Laminatstruktur gemäß einem der Ansprüche 1 bis 4, wobei das erste Polymermaterial weiter bis zu 90 Gew.-% eines Vinylhalogenids umfaßt.

6. Laminatstruktur gemäß Anspruch 2, wobei die Trägerschicht mindestens eines der folgenden umfaßt:
ein vernetzbares Vinylacetatcopolymer mit einer Vinylacetat-Ethylen-Emulsion, eine Polyurethanemulsion, ein Blend von Polyurethan-enthaltenden Emulsionen, eine Acrylcopolymeremulsion und eine Kombination von zwei oder mehreren davon.

7. Laminatstruktur gemäß einem der Ansprüche 1 bis 6, wobei die Druckfolie eine Haftmittelschicht auf einer unteren Oberfläche davon umfaßt, wobei die Haftmittelschicht aus mindestens einem von einem Haftmittel auf Petroleum-Basis, erneuerbarem Haftmittel auf Bio-Basis, einem Halogen-freien Haftmittel, einem Acrylhaftmittel oder einer Kombination von zwei oder mehreren davon ausgewählt ist, wobei jedes Haftmittel aus einem Haftmittel auf Lösungsmittel-Basis, einer Emulsion, einem Heißschmelzhaftmittel, einem UV-härtbaren Haftmittel, einem strahlungshärtbaren Haftmittel oder einer Kombination von zwei oder mehreren davon ausgewählt ist, wobei jedes Haftmittel als ein entfernbares Haftmittel oder als ein permanentes Haftmittel bereitgestellt werden kann.

8. Laminatstruktur gemäß Anspruch 2 oder 6, wobei die Trägerschicht eine Dicke von 2,5 µm bis 105 µm aufweist.

9. Verfahren zur Herstellung einer Druckfolie, umfassend:
das Bilden einer Druckschicht auf einem Substrat aus einer Druckschichtzusammensetzung, umfassend ein Polymermaterial, ausgewählt aus der Gruppe bestehend aus einem Vinylacetat-Homopolymer oder -copolymer oder dem Gemisch davon, einem Acrylcopolymer oder dessen Gemisch mit einem VAE-Copolymer, einem VAE- und Acryl-Hybrid, einem Gemisch von einem Acrylcopolymer mit einem Polyurethan-enthaltenden Polymer, einem Polyurethan-enthaltenden Polymer oder einer Kombination von zwei oder mehreren davon und
das Bilden einer Trägerschicht über einer Oberfläche der Druckschicht aus einer Trägerschichtzusammensetzung.

10. Verfahren gemäß Anspruch 9, weiter umfassend das Bilden einer Haftmittelschicht auf einer Oberfläche der Trägerschicht.

11. Verfahren zur Herstellung einer Laminatstruktur, umfassend:
das Formen einer Druckschicht auf einem Substrat aus einer Druckschichtzusammensetzung, umfassend:
ein Polymermaterial ausgewählt aus einem Vinylacetat-enthaltenden Polymer, einem Blend von Vinylacetat mit Vinylacetat-Ethylen, einer Gesamtacryl-Formulierung, einer Vinylacetat-Ethylen-Emulsion, einem Vinylacetat-Homopolymer, Vinylacetat-Copolymer, einem Gemisch von Vinylacetat-Homopolymer und Vinylacetat-Copolymer, einem Acrylcopolymer oder dessen Gemisch mit einem Vinylacetat-Ethylen-Copolymer, einem Vinylacetat-Ethylen- und Acryl-Hybrid, einem Polyurethan-enthaltenden Polymer oder einer Kombination von zwei oder mehreren davon,
das Bilden einer Trägerschicht über einer Oberfläche der Druckschicht aus einer Trägerschichtzusammensetzung,
das Laminieren einer Overlaminat-Folie auf einer oberen Oberfläche der Druckschicht.

12. Verfahren gemäß Anspruch 11, weiter umfassend das Bereitstellen einer funktionalen Beschichtung, die über der Overlaminat-Folie angeordnet wird.

13. Selbstklebende Laminatstruktur, umfassend:
eine Druckfolie, umfassend (1) eine Haftmittelschicht, (2) eine Trägerschicht, angeordnet über der Haftmittelschicht, und (3) eine Druckschicht, angeordnet über der Trägerschicht, wobei die Trägerschicht ein vernetzbares Vinylacetat-Copolymer, eine VAE-Emulsion, eine Polyurethan-Emulsion oder eine Kombination von zwei oder mehreren davon umfaßt, die Druckschicht ein Vinylacetatenthaltendes Polymer, ein Blend von Vinylacetat mit Vinylacetat-Ethylen, eine Gesamtacryl-Formulierung, eine Vinylacetat-Ethylen-Emulsion, ein Vinylacetat-Homopolymer, Vinylacetat-Copolymer, ein Gemisch von Vinylacetat-Homopolymer und Vinylacetat-Copolymer, ein Acrylcopolymer oder dessen Gemisch mit einem Vinylacetat-Ethylen-Copolymer, ein Vinylacetat-Ethylen- und Acryl-Hybrid, ein Gemisch von einem Acrylcopolymer mit einem Polyurethan-enthaltenden Polymer, ein Polyurethan enthaltendes Polymer oder eine Kombination von zwei oder mehreren davon umfaßt, und
eine Overlaminat-Folie, welche über der Druckfolie liegt, wobei die Overlaminat-Folie (1) eine Topschicht, umfassend ein Polyurethan, ein Polyurethan-AcrylCopolymer, ein Polyurethan-Acryl-Blend, ein Urethan-Acryl-Hybridpolymer oder eine Kombination von zwei oder mehreren umfaßt, und (2) eine untere Schicht, umfassend ein Polymer auf Nicht-PVC-Basis, umfaßt.

14. Selbstklebendes Laminat gemäß Anspruch 13, wobei
die Druckschicht mindestens ein Acrylharz umfaßt,
die Trägerschicht mindestens ein VAE Harz umfaßt,
die Topschicht ein Urethan-Hybridpolymer-Harz umfaßt, und
die untere Schicht ein Acrylpolymerharz umfaßt.

15. Selbstklebendes Laminat gemäß Anspruch 13 und 14, wobei die Druckschicht ein Niederoberflächenenergie-Additiv, ausgewählt aus einem Silikonenthaltenden Material, umfaßt.

## Revendications

1. Structure stratifiée comprenant :
un film d'impression comprenant une couche d'impression, la couche d'impression comprenant un polymère en émulsion choisi parmi un polymère contenant l'acétate de vinyle, un mélange d'acétate de vinyle et d'acétate de vinyle-éthylène, une formulation tout acrylique, une émulsion acétate de vinyle-éthylène, un homopolymère d'acétate de vinyle, un copolymère d'acétate de vinyle, un mélange d'homopolymère d'acétate de vinyle et de copolymère d'acétate de vinyle, un copolymère acrylique ou son mélange avec un copolymère acétate de vinyle-éthylène, un hybride acétate de vinyle-éthylène et acrylique, un polymère contenant un polyuréthanne, un mélange d'un copolymère acrylique avec un polymère contenant un polyuréthanne, ou une combinaison de deux ou plusieurs de ceux-ci ; et
un film de pelliculage, couvrant une surface supérieure du film d'impression, le film de pelliculage comprenant un polymère choisi parmi un polyuréthanne, un copolymère polyuréthanne-acrylique, un mélange polyuréthanne-acrylique, un copolymère hybride uréthanne-acrylique, un copolymère acrylique, un mélange d'acryliques, ou une combinaison de deux ou plusieurs de ceux-ci.

2. Structure stratifiée selon la revendication 1, où le film d'impression comprend une couche support disposée sur une surface inférieure de la couche d'impression, de préférence où la couche support comprend un matériau choisi parmi des polymères en émulsion de copolymère d'acétate de vinyle réticulable, une émulsion de VAE, une émulsion de polyuréthanne, ou une combinaison de deux ou plusieurs de ceux-ci.

3. Structure stratifiée selon la revendication 1 ou 2, où ladite couche d'impression comprend un additif de faible énergie surfacique, de préférence l'additif de faible énergie surfacique est choisi parmi un matériau fluoré, un matériau contenant une silicone, ou une combinaison de ceux-ci, de préférence où l'additif de faible énergie surfacique comprend un matériau contenant une silicone choisie parmi un siloxane, un silane ou une combinaison de ceux-ci.

4. Structure stratifiée selon l'une quelconque des revendications 1 à 3, où le film d'impression comprend en outre, une couche adhésive disposée sur une surface inférieure du film d'impression, comprenant un revêtement antiadhésif couvrant la couche adhésive.

5. Structure stratifiée selon l'une quelconque des revendications 1 à 4, où ledit premier matériau polymère comprend en outre, jusqu'à 90% en poids d'un halogénure de vinyle.

6. Structure stratifiée selon la revendication 2, où ladite couche support comprend au moins un des suivants :
un copolymère d'acétate de vinyle réticulable avec une émulsion acétate de vinyle-éthylène, une émulsion de polyuréthanne, un mélange d'émulsions contenant un polyuréthanne, une émulsion de copolymère acrylique, ou une combinaison de deux ou plusieurs de ceux-ci.

7. Structure stratifiée selon l'une quelconque des revendications 1 à 6, où le film d'impression comprend une couche adhésive sur sa face inférieure, la couche adhésive étant choisie parmi au moins l'un d'un adhésif à base de pétrole, un adhésif à base biologique renouvelable, un adhésif exempt d'halogène, un adhésif acrylique, ou une combinaison de deux ou plusieurs de ceux-ci ; chaque adhésif étant choisi parmi un adhésif à base de solvant, une émulsion, un adhésif fusible, un adhésif durcissable aux U.V., un adhésif durcissable par rayonnement, ou une combinaison de deux ou plusieurs de ceux-ci ; où chaque adhésif peut être fourni comme adhésif amovible ou adhésif permanent.

8. Structure stratifiée selon la revendication 2 ou 6, où ladite couche support présente une épaisseur allant de 2,5 µm à 105 µm.

9. Procédé de préparation d'un film d'impression, comprenant :
la formation d'une couche d'impression sur un substrat à partir d'une composition de couche d'impression comprenant un matériau polymère choisi parmi le groupe consistant en un homopolymère ou copolymère d'acétate de vinyle ou leur mélange, un copolymère d'acétate de vinyle ou son mélange avec un copolymère de VAE, un hybride VAE et acrylique, un mélange d'un copolymère acrylique et d'un polyuréthanne contenant un polymère, un polymère contenant un polyuréthanne, ou une combinaison de deux ou plusieurs de ceux-ci, et
la formation d'une couche support sur une surface de la couche d'impression à partir d'une composition de couche support.

10. Procédé selon la revendication 9, comprenant en outre, la formation d'une couche adhésive sur une face de la couche support.

11. Procédé de préparation d'une structure stratifiée, comprenant :
la formation d'une couche d'impression sur un substrat à partir d'une composition de couche d'impression comprenant :
un matériau polymère choisi parmi un polymère contenant l'acétate de vinyle, un mélange d'acétate de vinyle et d'acétate de vinyle-éthylène, une formulation tout acrylique, une émulsion acétate de vinyle-éthylène, un homopolymère d'acétate de vinyle, un copolymère d'acétate de vinyle, un mélange d'homopolymère d'acétate de vinyle et de copolymère d'acétate de vinyle, un copolymère acrylique ou son mélange avec un copolymère acétate de vinyle-éthylène, un hybride acétate de vinyle-éthylène et acrylique, un polymère contenant un polyuréthanne, ou une combinaison de deux ou plusieurs de ceux-ci ;
la formation d'une couche support sur une surface de la couche d'impression à partir d'une composition de couche support ;
la stratification d'un film de pelliculage sur une surface supérieure de la couche d'impression.

12. Procédé selon la revendication 11, comprenant en outre, l'application d'un revêtement fonctionnel sur le film de pelliculage.

13. Structure stratifiée autoadhésive comprenant :
un film d'impression comprenant (1) une couche adhésive, (2) une couche support disposée sur la couche adhésive, et (3) une couche d'impression disposée sur la couche support, la couche support comprenant un copolymère d'acétate de vinyle réticulable, une émulsion de VAE, une émulsion de polyuréthanne, ou une combinaison de deux ou plusieurs de ceux-ci, la couche d'impression comprenant un polymère contenant l'acétate de vinyle, un mélange d'acétate de vinyle et d'acétate de vinyle-éthylène, une formulation tout acrylique, une émulsion acétate de vinyle-éthylène, un homopolymère d'acétate de vinyle, un copolymère d'acétate de vinyle, un mélange d'homopolymère d'acétate de vinyle et de copolymère d'acétate de vinyle, un copolymère acrylique ou son mélange avec un copolymère acétate de vinyle-éthylène, un hybride acétate de vinyle-éthylène et acrylique, un mélange d'un copolymère acrylique et d'un polyuréthanne contenant un polymère, un polymère contenant un polyuréthanne, ou une combinaison de deux ou plusieurs de ceux-ci, et
un film de pelliculage couvrant le film d'impression, le film de pelliculage comprenant (1) une couche supérieure comprenant un polyuréthanne, un copolymère polyuréthanne-acrylique, un mélange polyuréthanne-acrylique, un polymère hybride uréthanne-acrylique, une combinaison de deux ou plusieurs de ceux-ci, et (2) une couche inférieure comprenant un polymère non à base de PVC.

14. Stratifié autoadhésif selon la revendication 13, où
la couche d'impression comprend au moins un résine acrylique ;
la couche support comprend au moins une résine VAE ;
la couche supérieure comprend une résine polymère hybride d'uréthanne, et
la couche inférieure comprend une résine polymère acrylique.

15. Stratifié autoadhésif selon la revendication 13 ou 14, où la couche d'impression comprend un additif à faible énergie surfacique choisi parmi un matériau contenant une silicone.
